# EUROPEAN PATENT APPLICATION

(11) **EP 4 826 427 A1**
(43) Date of publication of application: **21.10.2026**
(21) Application number: 25170350.0
(22) Date of filing: 14.04.2025
(51) Int. Cl.: G02B 7/00, G02B 7/18, G02B 23/02

(54) **THERMALLY ROBUST MOUNTING OF IMAGE ERECTING PRISM IN A TELESCOPE**

(71) Applicant: Trimble Inc., Westminster, CO 80021 (US)
(72) Inventor: CLAESON, Jonas, Westminster 80021 (US); WESTERMARK, Magnus, Westminster 80021 (US); ÅSTRAND, Per-Johan, Westminster 80021 (US)
(74) Representative: AWA Sweden AB

(57) **Abstract**

This disclosure relates to a telescope and to a method of manufacturing a telescope. The telescope (100) comprises a telescope body (101), a front lens (102) having a centre axis (A), a reticle (107) for determining a sighting axis of the telescope (100), and an image erecting prism (106) arranged between the front lens (102) and the reticle (107). The front lens (102) is connected to the telescope body (101). The reticle (107) is arranged such that light entering the telescope (100) through the front lens (102) along the centre axis (A) passes through the centre of the reticle (107). The image erecting prism (106) is connected to the telescope body (101) through an interface (200a; 200b) defining an attachment point (AP), said attachment point (AP) being positioned on the centre axis (A) of the front lens (102), and the reticle (107) is mounted to the image erecting prism (106).

## Description

### Technical field

The present disclosure relates to a telescope as well as to a method of manufacturing a telescope.

### Background

A telescope, such a surveying telescope or the telescope of a surveying instrument, may comprise multiple optical channels, including, for example an electronic distance meter (EDM), a tracker, and a visual channel. To ensure accurate measurements, the light beams for all channels are preferably aligned in the same direction when entering or exiting the front lens of the telescope.

However, the telescope, and the various components comprised therein, may comprise different materials having different coefficients of thermal expansion (CTE). Thermal fluctuations may therefore lead to light paths of different channels diverging from the centre axis of the front lens, which might in turn affect the accuracy and/or reliability of measurements or observations obtained by the different channels and, thus, the accuracy and/or reliability of the telescope or surveying instrument as a whole. Accordingly, it is always desirable to minimize the effects of thermal variations.

### Summary

According to a first aspect of the disclosure, there is provided a telescope comprising a telescope body, a front lens having a centre axis, a reticle for determining a sighting axis of the telescope, and an image erecting prism arranged between the front lens and the reticle. The front lens is connected to the telescope body. The reticle is arranged such that light entering the telescope through the front lens along the centre axis passes through the centre of the reticle. Further, the image erecting prism is connected to the telescope body through an interface defining an attachment point, wherein said attachment point is positioned on the centre axis of the front lens, and the reticle is mounted to the image erecting prism.

According to a second aspect of the disclosure, there is provided a method of manufacturing a telescope, wherein the telescope comprises a telescope body, a front lens having a centre axis, wherein the front lens is connected to the telescope body, a reticle for determining a sighting axis of the telescope, and an image erecting prism arranged between the front lens and the reticle. The reticle is arranged such that light entering the telescope through the front lens along the centre axis passes through the centre of the reticle. The method comprises the steps of:
- connecting the image erecting prism to the telescope body through an interface defining an attachment point,
- positioning said attachment point on the centre axis of the front lens, and
- mounting said reticle to the image erecting prism.

The method according to the second aspect may suitably be implemented to manufacture a telescope according to the first aspect. Accordingly, features and advantages described herein may apply equally to the telescope of the first aspect and the method of the second aspect, when implemented to manufacture such a telescope.

With a telescope according to the first aspect, and a telescope obtained by the method according to the second aspect, a thermal offset of the sighting axis with respect to the centre axis of the front lens is reduced towards zero. In other words, a thermal offset of the sighting axis with respect to the centre axis of the front lens may be minimized.

The thermal offset of the sighting axis with respect to the centre axis of the front lens refers to a change in relative position and/or orientation of the sighting axis with respect to the centre axis of the front lens due to a temperature change.

As mentioned above, the image erecting prism is arranged between the front lens and the reticle. Accordingly, the image erecting prism is arranged between the front lens and the reticle on an optical path going from the front lens towards the reticle. In other words, on such an optical path, the image erecting prism is arranged downstream of the front lens and upstream of the reticle.

In the context of this disclosure, the sighting axis refers to the axis along which light travels before reaching the front lens, when traveling along a light path that goes through the centre of the reticle. This light path may be referred to as the sighting axis light path.

The light path of light entering the telescope through the telescope along the centre axis of the front lens may be referred to the centre axis light path.

The reticle may comprise a crosshair. The centre of the reticle may then refer to the centre of the reticle crosshair.

The sighting axis may alternatively be referred to as the aiming direction of the telescope.

Thus, the reticle being arranged such that light entering the telescope through the front lens along the centre axis passes through the centre of the reticle may be expressed as the reticle being arranged such that the sighting axis coincides with the centre axis of the front lens.

The present arrangement may thus provide a thermally robust alignment of the sighting axis with the centre axis of the front lens. Thereby, the present arrangement may provide increased accuracy to the telescope in case of temperature shifts in the operating environment of the telescope.

The image erecting prism may, for example, be one of a Porro prism, a Porro prism of the first type, a Porro prism of the second type, a Porro-Abbe prism, a Porro-Perger prism, an Abbe-König prism, an Uppendahl prism, a Shmidt prism, a Schmidt-Pechan prism, a Leeman prism, or an Amici Roof prism.

According to at least an example embodiment, said interface comprises a connection portion connected to said telescope body, and a support portion connected to said image erecting prism.

At least one intermediate element for connecting the image erecting prism to the telescope body is thus provided. This may facilitate and provide greater flexibility for connecting the image erecting prism to the telescope body.

According to at least an example embodiment, said connection portion and said support portion are together formed as one body.

According to at least an example embodiment, said connection portion and said support portion are separate elements. The connection portion and the support portion are connected to each other.

Further, the connecting portion and the support portion may be directly connected to each other, or the connecting portion and the support portion may be connected to each other via one or more additional interface elements.

In other words, the interface may comprise a single element, or the interface may comprise a plurality of elements connected to each other.

According to at least an example embodiment, the connection portion comprises a projecting part, wherein a longitudinal axis of said projecting part coincides with said centre axis of the front lens.

The projecting part may be in the form of a cylinder.

According to at least an example embodiment, the connection portion is connected to said telescope body by any one of press fit, shrink fit, welding, friction welding, a glue joint, a screw joint, a bolted joint, or combinations thereof.

According to at least an example embodiment, the support portion comprises a support prism cemented to the image erecting prism.

According to at least an example embodiment, the telescope body comprises a first material having a first coefficient of thermal expansion and said image erecting prism comprises a second material having a second coefficient of thermal expansion. The interface comprises at least a first interface material having a third coefficient of thermal expansion, wherein a difference between said third coefficient of thermal expansion and said second coefficient of thermal expansion is smaller than a difference between said third coefficient of thermal expansion and said first coefficient of thermal expansion.

In the context of this disclosure, a coefficient of thermal expansion may refer to a coefficient of linear thermal expansion.

Thus, the third coefficient of thermal expansion may be closer to the second coefficient of thermal expansion than to the first coefficient of thermal expansion.

The third coefficient of thermal expansion may be higher than the second coefficient of thermal expansion. The third coefficient of thermal expansion may be lower than the second coefficient of thermal expansion.

According to an example, the third coefficient of thermal expansion may be within ±5%, or ±10%, or ±15%, or ±20%, or ±25%, or ±30%, or ±40%, or ±50% of the second coefficient of thermal expansion.

Such an arrangement allows the image erecting prism to be attached to a material having a coefficient of thermal expansion close to that of the image erecting prism, compared to the material of the telescope body. Thermal stresses at the interface between the image erecting prism and the material to which it is attached may be reduced. Thereby, the risk of cracking of the image erecting prism may be reduced.

According to at least an example embodiment, the third coefficient of thermal expansion is substantially equal to said second coefficient of thermal expansion.

According to at least an example embodiment, the telescope is a telescope for a surveying instrument.

According to at least an example embodiment, the interface comprises a connection portion and a support portion, and connecting the image erecting prism to the telescope body comprises connecting the connection portion to the telescope body and connecting the support portion to the image erecting prism.

According to at least an example embodiment, the connection portion comprises a projecting part, and the method comprises connecting the connection portion to the telescope body such that a longitudinal axis of the projecting part coincides with the centre axis of the front lens.

According to at least an example embodiment, the method comprises connecting the connection portion by any one of press fit, shrink fit, welding, friction welding, a glue joint, a screw joint, a bolted joint, or any combination thereof.

According to at least one example embodiment, the support portion comprises a support prism, and the method comprises cementing the support prism to the image erecting prism.

### Brief description of the drawings

Aspects of the present inventive concept, including its particular features and advantages, will now be further described with reference to the accompanying drawings, in which:
- Fig. 1a: is a schematic illustration of a telescope according to an embodiment,
- Fig. 1b: is a schematic illustration of the thermal offset of the sighting axis,
- Fig. 2a: is a schematic front view of a reticle,
- Fig. 2b: is a schematic side view of a reticle,
- Fig. 2c: is a schematic side view of a reticle mounted to the telescope body,
- Fig. 2d: is a schematic side view of a reticle mounted to the image erecting prism,
- Fig. 3: is a schematic perspective view of a Porro prism,
- Figs. 4a-b: are side views of the Porro prism schematically illustrating the effect of a vertical translation of the Porro prism on the centre axis light path,
- Figs. 5a-b: are top views of the Porro prism schematically illustrating the effect of a horizontal translation of the Porro prism on the centre axis light path,
- Fig. 6: is a schematic front view of the reticle illustrating the horizontal and vertical error,
- Fig. 7a: is a schematic side view of the Porro prism illustrating the vertical distance between the attachment point and the centre axis of the front lens,
- Fig. 7b: is a schematic front view of the Porro prism illustrating the horizontal distance between the attachment point and the centre axis of the front lens,
- Figs. 8a-b: are schematic illustrations of a model for determining the vertical error,
- Figs. 9a-b: are schematic illustrations of a model for determining the horizontal error, and
- Figs. 10a-b: are schematic illustrations of the interface connecting the Porro prism and the telescope body according to example implementations.

### Detailed description

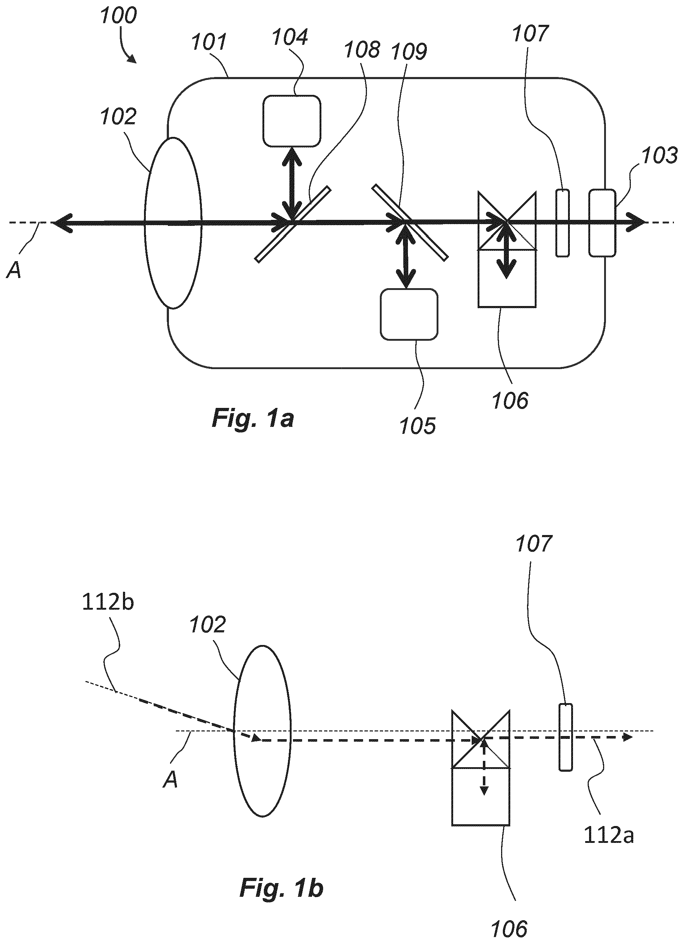

A telescope, such as for example the telescope of a surveying instrument, may comprise several optical channels. Such a telescope 100 is schematically illustrated in Fig. 1a. The telescope 100 comprises a telescope body 101, a front lens 102, a reticle 107, and an eyepiece 103, through which a user may view the reticle 107 inside the telescope 100. The front lens 102 of the telescope 100 has a centre axis A.

In addition to the visual channel (i.e., the optical channel going from the front lens to the eyepiece), the telescope may for example comprise an electronic distance meter (EDM) 104 and a tracker 105. In the example of Fig. 1a, a first beam splitter 108 is arranged to provide a light path between the front lens 102 and the EDM 104 (EDM channel). A second beam splitter 109 is arranged to provide a light path between the front lens 102 and the tracker 105 (tracker channel). The light path in the tracker channel goes through the first beam splitter 108. The light path in the visual channel goes through both the first beam splitter 108 and the second beam splitter 109.

To obtain accurate measurement, the light beams for all channels are preferably aligned in the same direction when entering or exiting the front lens 102.

The image in the visual channel, formed in an intermediate plane by the front lens 102 and subsequent optical elements, is rotated by 180° compared to the real-world scenery. An erecting optical system (or erecting prism, or erecting lens) is thus needed to provide the user with an upright image. In the telescope depicted in Fig. 1a, the erecting optical system is in the form of a Porro prism 106. In particular, the Porro prism 106 may be a Porro prism of the second type, or a Porro-Abbe prism.

Other types of image erecting prisms may be used, such as, for example, an Abbe-König prism, an Uppendahl prism, a Shmidt prism, a Schmidt-Pechan prism, a Leeman prism, or an Amici Roof prism.

In some embodiments (not illustrated), the erecting optical system, or image erecting prism, may itself be modified to have multiple optical paths. For example, the received light path (coming from the front lens 102) may be split (e.g., inside the Porro prism 106) so that 50% of the light is directed to the reticle 107 and 50% of the light is directed to a camera.

The telescope 100 also comprises a reticle 107 for determining the sighting axis of the telescope 100.

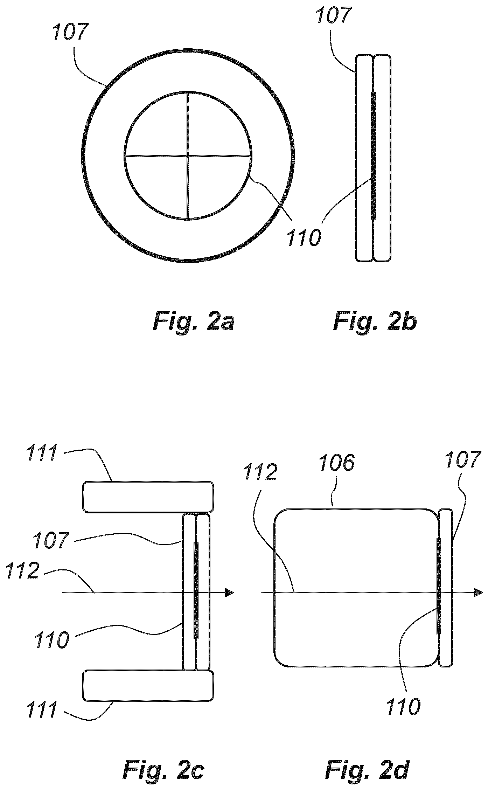

With reference also to Figs. 2a and 2b, the reticle 107 is a glass component comprising a patterned layer 110, typically forming a cross (crosshair). Different patterns are possible. According to an example, the pattern may be formed by a thin chrome layer. Positioned in the intermediate image plane, the cross is overlayed on the image of the scenery, providing a reference for the aiming direction, i.e., the sighting axis of the telescope 100.

In more detail, the sighting axis (cf. also sighting axis 112b in Fig. 1b) is the axis along which light travels before reaching the front lens 102, when traveling along a light path that goes through the centre of the reticle 107 (i.e., the centre of the crosshair). This light path may be referred to as the sighting axis light path (cf. also sighting axis light path 112a in Fig. 1b).

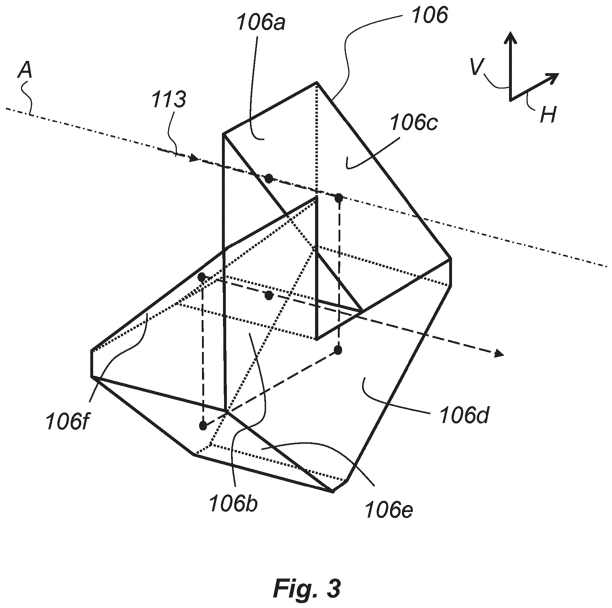

The light path of light entering the telescope 100 through the front lens 102 along the centre axis A of the front lens 102 may be referred to as the centre axis light path (cf. also centre axis light path 113 in e.g., Fig. 3).

In the example of Fig. 1a, the reticle 107 is arranged such that light entering the telescope 100 through the front lens 102 along the centre axis A passes through the centre of the reticle 107. In other words, the reticle 107 is arranged such that the sighting axis coincides with the centre axis A of the front lens 102. Expressed yet differently, the reticle 107 is arranged such that the sighting axis light path coincides with the centre axis light path.

The image erecting prism (here illustrated as the Porro prism 106) is typically made of glass and is attached to the telescope body 101. The telescope body is typically made of, or comprises, one or several metallic materials. Examples of metals used for the telescope body 101 may include, for example, aluminium (or aluminium alloys), and magnesium (or magnesium alloys).

Due to the differences in coefficients of thermal expansion (CTE) between the Porro prism 106 and the telescope body 101 (e.g., between glass and metal), the position of the Porro prism 106 (and of the reflective surfaces in the Porro prism 106) may change, relative to the centre axis A, when the temperature changes. The light path of the visual channel may thus shift with temperature changes. Consequently, the visual channel may not align with the other optical channels. The extent of this thermal shift depends on the temperature as well as on the CTE of the Porro prism 106, on the CTE of the telescope body 101, and on the specific location where the Porro prism 106 is attached to the telescope body 101.

The reticle 107 may be mounted in a metal holder 111 connected to the telescope body 101, as illustrated in Fig. 2c, or cemented directly onto the image erecting prism 106, as illustrated in Fig. 2d. In Figs. 2c and 2d, part of the sighting axis light path is indicated by the arrow 112.

Depending on the temperature as well as on the location and material on which the reticle 107 is mounted, different thermal shifts of the reticle 107 may occur. A thermal shift of the reticle 107 refers to a change in the position of the reticle 107 relative to the Porro prism 106 and/or relative to the centre axis A of the front lens 102 due to a shift in temperature.

In general, both the thermal shift of the Porro prism 106 and the thermal shift of the reticle 107 may affect the centre axis light path and the sighting axis light path.

Thus, a change in temperature may induce a thermal offset of the sighting axis with respect to the centre axis A of the front lens 102. This is schematically illustrated in Fig. 1b. In this illustration, only the front lens 102, the Porro prism 106 and the reticle 107 are depicted, while further elements of the telescope have been omitted. Compared to Fig. 1a, the positions of the Porro prism 106 and of the reticle 107 relative to the centre axis A have changed. The sighting axis light path 112a is marked by dashed arrows. The sighting axis 112b is oriented differently than the centre axis A. There is thus an (angular) offset of the sighting axis 112b with respect to the centre axis A.

It should be noted that while the effect of a temperature change is illustrated for the specific case of the image erecting prism being a Porro prism, a temperature change may similarly result in a thermal offset of the sighting axis with respect to the centre axis of the front lens when any other type of image erecting prism is used.

An example of a Porro prism 106 is illustrated in perspective in Fig. 3. The centre axis light path 113 is shown with a succession of dashed arrows. Light coming from the front lens of the telescope 100 along the centre axis A enters the Porro prism at a first face 106a. Thereafter, the light is internally reflected four times, before exiting the Porro prism at a second face 106b. The internal reflections occur at sloped surfaces 106c, 106d, 106e and 106f, respectively. In the figure, a dot marked on the first face 106a where the centre axis light path 113 enters the Porro prism 106 and on the second face 106b where the centre axis light path 113 exits the Porro prism 106. A similar dot is marked on each of the surfaces 106c, 106d, 106e, and 106f, at the respective location where internal reflections occur. When light enters the Porro prism at a 90° angle to the first face 106a, each internal reflection occurs with an incidence angle of 45°.

In the present disclosure, the terms "vertical" and "horizontal" are respectively used in reference to the directions indicated by the arrows V and H of Fig. 3.

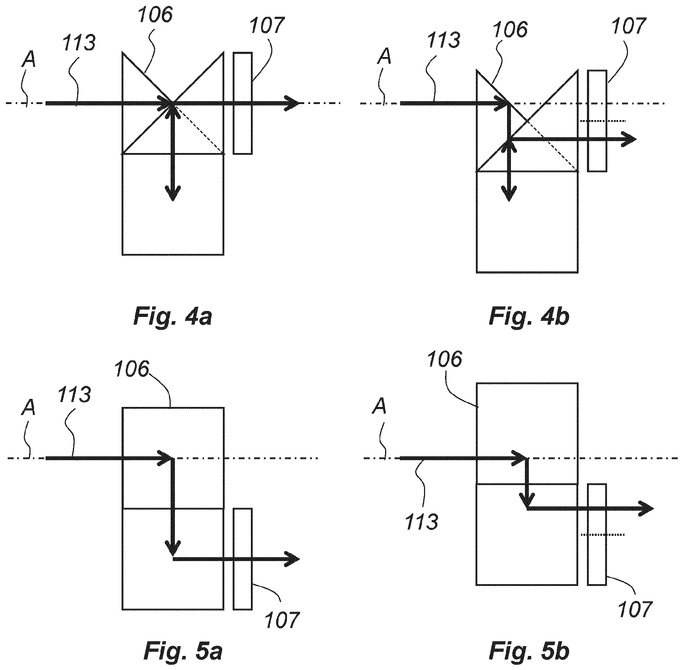

The effect of a thermal shift of the Porro prism is illustrated in Figs. 4a-b and 5a-b. Fig. 4a is a schematic side view of the Porro prism 106; Figs. 5a is a schematic top view of the Porro prism 106. The centre axis A is shown in a dashed-dotted line and the centre axis light path 113 is marked with a succession of arrows. In both Figs. 4a and 5a, the centre axis light path 113 goes through the centre of the reticle 107.

In Fig. 4b, which is a side view like Fig. 4a, the Porro prism 106 has been subjected to a vertical translation with respect to the centre axis A, compared to the arrangement of Fig. 4a. Owing to the geometry of the Porro prism 106, the centre axis light path 113 is vertically shifted by the same distance with respect to the centre of the reticle 107.

In Fig. 5b, which is a top view like Fig. 5a, the Porro prism 106 has been subjected to a horizontal translation with respect to the centre axis A, compared to the arrangement of Fig. 5a. Owing to the geometry of the Porro prism 106, the centre axis light path 113 is horizontally shifted by the same distance with respect to the centre of the reticle 107.

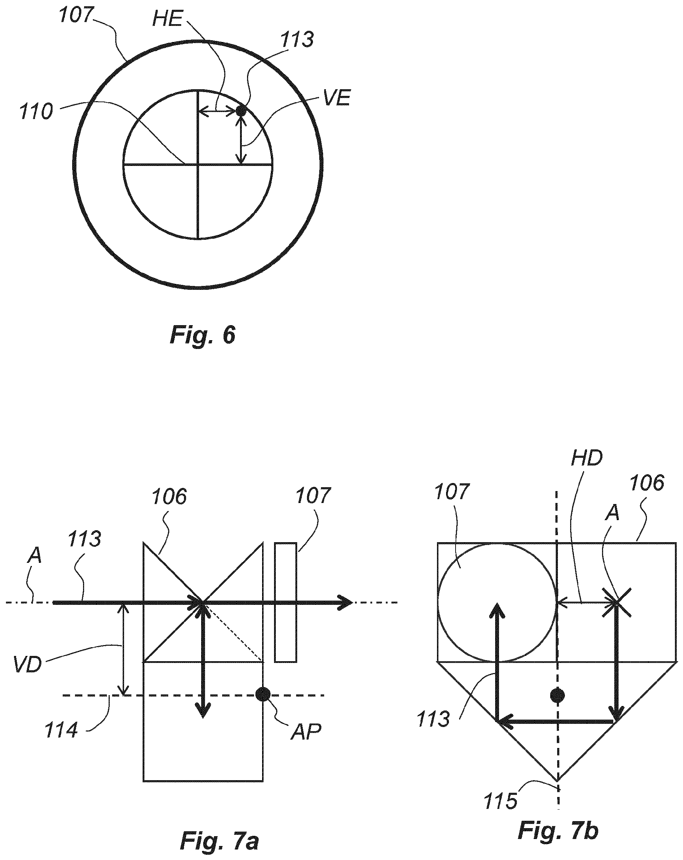

The combined effect of the vertical and horizontal shift can be seen in Fig. 6, which shows a front view of the reticle 107. The centre axis light path 113 is offset both vertically and horizontally with respect to the centre of the reticle 107 crosshair. The vertical offset between the centre axis light path and the centre of the reticle 107 crosshair may be referred to as the vertical error VE. Conversely, the horizontal offset between the centre axis light path and the centre of the reticle 107 crosshair may be referred to as the horizontal error HE.

The location where the Porro prism 106 is connected to the telescope body 101 may be referred to as the attachment point. In practice, this is not a single point but an extended area, which depending on the method used to connect the Porro prism 106 to the telescope body 101, may cover, for example, a few square millimetres. In general, the Porro prism 106 is connected to the telescope body 101 through an interface, which interface defines the attachment point.

The attachment point may represent (or be modelled as) an infinitesimal point at which the Porro prism is connected to the telescope body, and around which point the Porro prism and the telescope body are free to expand (or contract) according to their respective coefficient of thermal expansion.

As mentioned above, the front lens is connected to the telescope body 101. The Porro prism 106 is connected to the telescope body 101. The reticle 107 may be connected to the Porro prism 106 or to the telescope body 101.

For calculating the thermal offset, the attachment point may be modelled as an infinitesimal point. Thus, a vertical distance VD between the attachment point AP and the centre axis A may be defined as the distance between the centre axis A and a horizontal plane 114 going through the attachment point, as illustrated in Fig. 7a. A horizontal distance HD between the attachment point and the centre axis A may be defined as the distance between the centre axis A and a vertical plane 115 going through the attachment point, as illustrated in Fig. 7b.

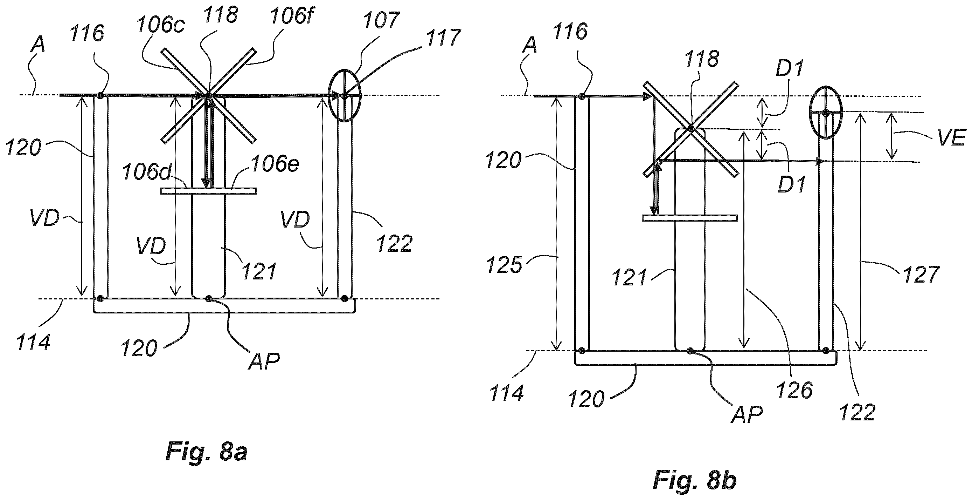

Further, the front lens 102 may be modelled as having a front lens attachment point 116 (shown in Fig. 8a) located at the centre of the front lens 102, thus on the centre axis A of the front lens 102. The reticle 107 may be modelled as having a reticle attachment point 117 (shown in Fig. 8a) located at the centre of the reticle 107 crosshair.

This model is illustrated in Fig. 8a, which schematically illustrates the nominal centre axis light path at equilibrium temperature in a side view. The front lens is connected to metal 120 of the telescope body, which is schematically illustrated with the front lens attachment point 116 being on the centre axis A of the front lens. The Porro prism, which is made of glass 121, is attached to the metal 120 of the telescope body at the attachment point AP. The reticle 107 is illustrated with its reticle attachment point 117 on the same vertical level as the centre axis A. The reticle 107 is mounted on a material 122, which is either glass (if the reticle 107 is mounted to the Porro prism) or metal (if the reticle 107 is mounted to the telescope body).

The centre axis light path is illustrated by arrows. A first reflection occurs on surface 106c of the Porro prism, whereby the light beam is directed towards surface 106d. At surface 106d, the light beam is reflected towards surface 106e. The light path between surface 106d and surface 106e is perpendicular to the plane of the drawing. At surface 106e, the light beam is reflected towards surface 106f. Finally, at surface 106f, the light beam is reflected towards the centre of the reticle 107 crosshair.

The distance between the horizontal plane 114 going through the attachment point AP and the centre axis A is VD. Thus, the distance between the front lens attachment point 116 and the plane 114 is VD. The distance between the reticle attachment point 117 and the plane 114 is also VD.

The Porro prism is arranged such that the intersection 118 of the respective planes of the surface 106c and the surface 106f intersect the centre axis A. The distance between the attachment point AP and the intersection 118 is thus also VD. By this arrangement, the centre axis light path enters and exits the Porro prism at the same vertical level.

The coefficient of thermal expansion of the metal 120 of the telescope body will be denoted CTEM in the following. The coefficient of thermal expansion of the glass 121 of the Porro prism will be denoted CTEG in the following. The coefficient of thermal expansion of the material to which the reticle 107 is mounted will be denoted CTER in the following.

Fig. 8b illustrates the system of Fig. 8a exposed to a temperature change ΔT. The metal 120 of the telescope body, the glass 121 of the Porro prism, and the material 122 (glass or metal) on which the reticle 107 is mounted expand according to their respective coefficients of thermal expansion. The intersection 118 is vertically shifted by a distance D1 with respect to the centre axis A, which in turn results in the vertical error VE for the centre axis light path.

The distance 125 between the front lens attachment point 116 and the plane 114 is VD*CTEM*ΔT.

The distance 126 between the intersection 118 and the attachment point AP is VD*CTEG*ΔT.

The distance 127 between the reticle attachment point 117 and the plane 114 is VD*CTER*ΔT.

Thus, the vertical error VE can be determined by the following equations: $D 1 = VD * CTEM * ΔT - VD * CTEG * ΔT$ $VE = 2 * D 1 - \left(VD*CTEM*ΔT-VD*CTER*ΔT\right)$

Thus: $VE = VD * ΔT * \left(CTEM+CTER-2*CTEG\right)$

If the reticle is mounted to the Porro prism and CTER = CTEG: ${VE}_{ReticleGlassMounted} = VD * ΔT * \left(CTEM-CTEG\right)$ (1)

If the reticle is mounted to the telescope body and CTER = CTEM: ${VE}_{ReticleMetalMounted} = 2 * VD * ΔT * \left(CTEM-CTEG\right)$ (2)

From equations (1) and (2) it can be concluded that:
- VE is twice as large when the reticle is mounted on metal compared to when the reticle is mounted on glass,
- VE=0 if the CTE of glass and metal are equal, CTEM=CTEG,
- VE=0 if VD=0, that is when the attachment point AP is on the centre axis A.

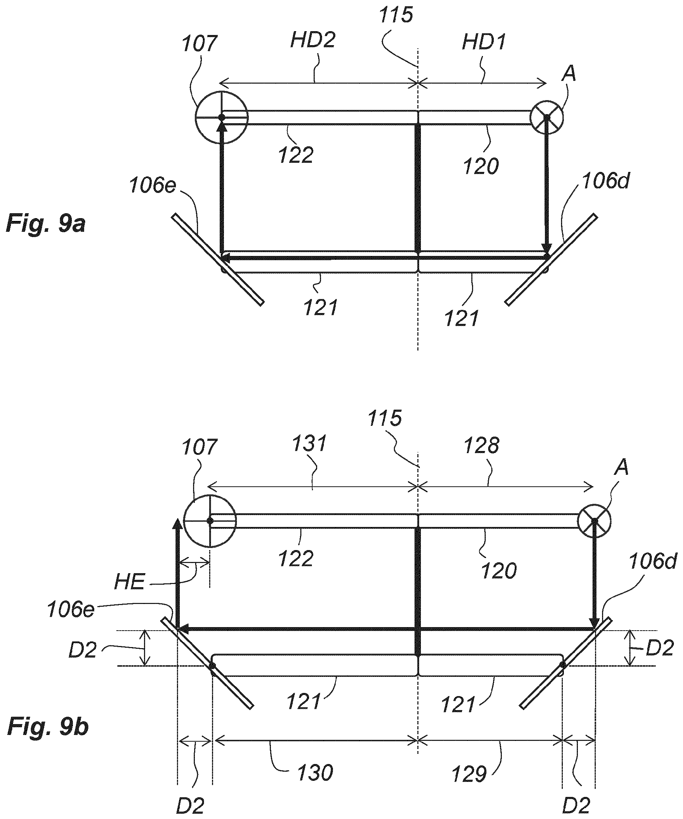

The nominal centre axis light path at equilibrium temperature is also schematically illustrated in the front view of Fig. 9a.

The attachment point AP of the Porro prism is on the vertical plane 115. The horizontal distance between the centre axis A and the plane 115 is HD1. As in Figs. 8a and 8b, the reticle 107 is mounted on a material 122 which is either glass (if the reticle 107 is mounted to the Porro prism) or metal (if the reticle 107 is mounted to the telescope body). The distance between the centre of the reticle 107 crosshair and the plane 115 is HD2.

The Porro prism is modelled as having a horizontal distance HD1 between the plane 115 and surface 106d, and a horizontal distance HD2 between the plane 115 and the surface 106e.

Visible in Fig. 9a are the parts of the centre axis light path between surface 106c and surface 106d, between surface 106d and surface 106e, and between surface 106e and surface 106f.

The coefficients of thermal expansion of the metal 120, glass 121 and material 122 (glass or metal) to which the reticle 107 is mounted are the same as detailed above in connection to Figs. 8a-b.

Thus, the front view of Fig. 9b illustrates the system exposed to a temperature change ΔT. Thermal expansion of the different materials results in that:
- the horizontal distance 128 between the plane 115 and the centre axis A is HD1*CTEM*ΔT,
- the horizontal distance 129 between the plane 115 and the surface 106d is HD1*CTEG*ΔT,
- the horizontal distance 130 between the plane 115 and the surface 106e is HD2*CTEG*ΔT, and
- the horizontal distance 131 between the plane 115 and the centre of the reticle 107 crosshair is HD2*CTER*ΔT.

The distances 128 and 129 differ by D2. In other words, the point of reflection of the light beam on surface 106d is offset horizontally by D2. Since the surfaces 106d and 106e are angled at 45°, the light path between surfaces 106d and 106e is also vertically offset by D2. After reflection of the surface 106e, the centre axis light path is horizontally offset with respect to the centre of the reticle 107 crosshair, resulting in a horizontal error HE for the centre axis light path.

The horizontal error HE can be expressed as: $HE = \left(HD2*CTEG*ΔT\right) + D 2 - HD 2 * CTER * ΔT .$

D2 can be calculated as: $D 2 = HD 1 * CTEM * ΔT - HD 1 * CTEG * ΔT .$

Then: $HE = - ΔT * \left(CTEG*HD1-CTEG*HD2-CTEM*HD1+CTER*HD2\right) .$

If the reticle 107 is mounted to the Porro prism and CTER=CTEG, then: ${HE}_{ReticleGlassMounted} = - HD 1 * ΔT * \left(CTEG-CTEM\right)$ (3)

If the reticle 107 is mounted to the telescope body and CTER=CTEM, then: ${HE}_{ReticleMetalMounted} = - ΔT * \left(CTEG-CTEM\right) * \left(HD1-HD2\right)$ (4)

From equations (3) and (4) it can be concluded that:
- HE=0 when the reticle 107 is mounted on glass (on the Porro prism) and the attachment point AP is located on the same vertical plane as the centre axis A, i.e., HD1=0,
- HE=0 if HD1=HD2 when the reticle is mounted on metal (on the telescope body),
- HE=0 if the CTE of glass and metal are equal, CTEM=CTEG.

Accordingly, the vertical error VE and the horizontal error HE are both equal to 0 in a configuration where the reticle 107 is mounted on glass (on the Porro prism) and the attachment point AP is on the centre axis A, i.e., HD1=0 and VD=0.

Thus, by mounting the reticle 107 to the Porro prism and positioning the attachment point AP on the centre axis A of the front lens, the thermal offset of the sighting axis of the telescope may be reduced towards zero.

Similar calculations may be performed based on the geometries of other types of image erecting prisms, such as those mentioned above. Based on these calculations, it may also be concluded that by mounting the reticle on the image erecting prism and positioning the attachment point on the centre axis of the front lens, the thermal offset of the sighting axis of the telescope may be reduced towards zero.

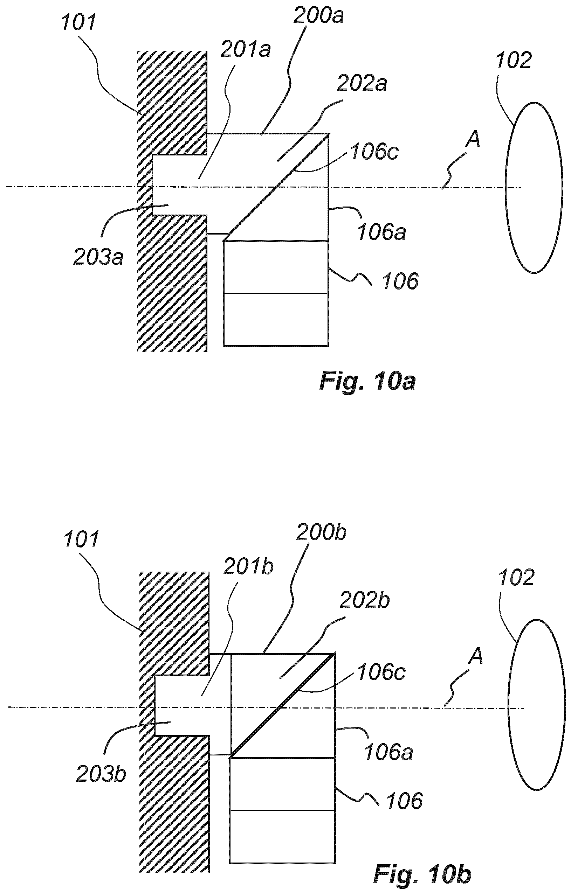

Schematic examples of how the interface 200a, 200b between the image erecting prism 106 (here a Porro prism 106) and the telescope body 101 can be implemented are shown in Figs. 10a and 10b. In both examples, the interface 200a, 200b comprises a connection portion 201a, 201b, which is connected to the telescope body 101, and a support portion 202a, 202b which is connected to the Porro prism 106.

In the example of Fig. 10a, the connection portion 201a and the support portion 202a are together formed as one body. The interface 200a is thus a single element. In the example of Fig. 10b, the connection portion 201b and the support portion 202b are separate elements which are connected to each other.

The support portion 202a, 202b is positioned on the Porro prism 106 along the centre axis A of the front lens. However, the support portion 202a, 202b does not obscure the centre axis light path. In the examples of Figs. 10a and 10b, the support portion 202a, 202b is attached to the surface 106c on which the first internal reflection in the Porro prism 106 occurs. The support portion 202a, 202b is not attached to the Porro prism on the first face 106a of the Porro prism 106.

In the examples of Figs. 10a and 10b, the connection portion 201a, 201b comprises a projecting part 203a, 203b, a longitudinal axis of which coincides with the centre axis A. The projecting part may advantageously be in the form of a cylinder. Other shapes are however possible.

An additional advantage of positioning the attachment point AP on the centre axis A of the front lens, for example by the arrangement illustrated in Figs. 10a and 10b, is that no vertical error VE or horizontal error HE is induced by a rotation of the Porro prism 106 about the centre axis A. In contrast, if the attachment point is not on the centre axis A, then a rotation of the Porro prism 106 about an axis passing through the attachment point AP and being parallel to the centre axis A does cause a vertical error VE and horizontal error HE. For example, such a rotation of the Porro prism 106 could theoretically happen in case of failure of the attachment point AP. Thus, positioning the attachment point AP on the centre axis A may further contribute to stability and reliability of the system.

Methods of attaching the connection portion 201a, 201b to the telescope body 101 include press fit, shrink fit, friction welding, glue or adhesive, mechanical clamping, or any appropriate mechanical fastener.

A cylindrical projecting part 203a, 203b attached to the telescope body 101 into a corresponding hole or cavity as depicted in Figs. 10a and 10b may ensure concentricity of the assembly. As mentioned above, the cross section of the projecting part may be other than circular, such as for example triangular, elliptical or in the shape of a square.

It should be noted that the telescope body 101 may comprises a plurality of elements. The telescope body 101 may for example comprise a bracket connected to the rest of the telescope body, to which the interface 200a, 200b is connected.

Similar principles may be used in implementing the interface between the image erecting prism and the telescope body in embodiments using other types of image erecting prisms. The interface (and parts thereof, e.g., the connection portion and the support portion) should not obscure the light path between the front lens and the reticle.

When a glass component is attached to an element having a substantially different coefficient of thermal expansion, CTE, high thermal stresses may be created at the interface between the glass component and the other element. As glass is a brittle material, the thermal stresses may cause cracking in the glass component.

In contrast, metals can generally withstand higher stress than glass before deforming, experiencing fatigue, or cracking.

Therefore, if there is a large difference in CTE between the glass of the image erecting prism and the metal of the telescope body, the risk of cracking can be reduced by including multiple steps in the connection between the Porro prism and the telescope body, as provided by the interface 200a, 200b.

As an example, the CTE of the Porro prism 106 may be about 8*10⁻⁶/K (typical of many glass materials). The metal of the telescope body 101 may have a CTE of about 20*10⁻⁶/K (if, for example, the telescope body 101 is made of aluminium).

In the example of Fig. 10a, the interface 200a may be made of a metal having a CTE of about 10*10⁻⁶/K. The CTE of (the support portion 202a of) the interface 200a is thus a closer match to the CTE of the Porro prism 106 than the CTE of the telescope body 101. The risk of cracking of the Porro prism 106 is thus reduced, compared to a direct attachment of the Porro prism 106 to the telescope body 101.

**In** the example of Fig. 10b, the connection portion 201b may be made of a similar metal as the interface 200a of Fig. 10a, and thus have a CTE of about 10*10⁻⁶/K. The support portion 202b may be made of a yet different material, as long as it provides a relatively stress-free connection to the Porro prism 106. For example, the support portion 202b may be a support prism, in which case the support portion 202b is made of glass and has a similar CTE as the Porro prism 106. The support portion 202b may alternatively be made of a ceramic material, or a different metallic material (compared to the connection portion 201b), for example.

In both these examples, the connection portion 201a, 201b, having a CTE of about 10*10⁻⁶/K, is connected to the telescope body 101 having a CTE of about 20*10⁻⁶/K. This difference in CTE is however not likely to cause cracking, fatigue, or undesirable deformation, as metals generally can withstand much higher stress than glass.

The risk of glass cracking may be reduced by an interface 200a, 200b as depicted in Figs. 10a and 10b.

The person skilled in the art realizes that the present inventive concept by no means is limited to the preferred embodiments described above. On the contrary, many modifications and variations are possible within the scope of the appended claims. The word "comprising" does not exclude the presence of other elements or steps that those listed in the claims. The word "a" or "an" preceding an element does not exclude the presence of a plurality of such elements.

## Claims

1. A telescope (100) comprising:
a telescope body (101),
a front lens (102) having a centre axis (A), wherein said front lens (102) is connected to the telescope body (101),
a reticle (107) for determining a sighting axis of the telescope (100), and
an image erecting prism (106) arranged between the front lens (102) and the reticle (107),
wherein the reticle (107) is arranged such that light entering the telescope (100) through the front lens (102) along the centre axis (A) passes through the centre of the reticle (107),
wherein said image erecting prism (106) is connected to the telescope body (101) through an interface (200a; 200b) defining an attachment point (AP),
wherein said attachment point (AP) is positioned on the centre axis (A) of the front lens (102), and
the reticle (107) is mounted to the image erecting prism (106).

2. A telescope according to claim 1, wherein said interface (200a; 200b) comprises:
a connection portion (201a; 201b) connected to said telescope body (101), and
a support portion (202a; 202b) connected to said image erecting prism (106).

3. A telescope according to claim 2, wherein said connection portion (201a) and said support portion (202a) are together formed as one body.

4. A telescope according to claim 2, wherein said connection portion (201b) and said support portion (202b) are separate elements, wherein said connection portion (201b) and said support portion (202b) are connected to each other.

5. A telescope according to any one of claims 2 to 4, wherein said connection portion (201a; 201b) comprises a projecting part (203a; 203b), wherein a longitudinal axis of said projecting part (203a; 203b) coincides with said centre axis (A) of the front lens (102).

6. A telescope according to any one of claims 2 to 5, wherein said support portion (202a; 202b) comprises a support prism cemented to said image erecting prism (106).

7. A telescope according to any one of the preceding claims, wherein said telescope body (101) comprises a first material having a first coefficient of thermal expansion and said image erecting prism (106) comprises a second material having a second coefficient of thermal expansion,
wherein said interface (200a; 200b) comprises at least a first interface material having a third coefficient of thermal expansion, wherein a difference between said third coefficient of thermal expansion and said second coefficient of thermal expansion is smaller than a difference between said third coefficient of thermal expansion and said first coefficient of thermal expansion.

8. A telescope according to claim 7, wherein said third coefficient of thermal expansion is substantially equal to said second coefficient of thermal expansion.

9. A telescope according to any one of the preceding claims,
wherein said telescope is a telescope for a surveying instrument.

10. A telescope according to any one of the preceding claims,
wherein said image erecting prism is one of a Porro prism, a Porro prism of the first type, a Porro prism of the second type, a Porro-Abbe prism, a Porro-Perger prism, an Abbe-König prism, an Uppendahl prism, a Shmidt prism, a Schmidt-Pechan prism, a Leeman prism, or an Amici Roof prism.

11. A method of manufacturing a telescope (100), wherein the telescope (100) comprises:
a telescope body (101),
a front lens (102) having a centre axis (A), wherein said front lens (102) is connected to the telescope body (101),
a reticle (107) for determining a sighting axis of the telescope (100),
an image erecting prism (106) arranged between the front lens (102) and the reticle (107),
wherein the reticle (107) is arranged such that light entering the telescope (100) through the front lens (102) along the centre axis (A) passes through the centre of the reticle (107),
wherein the method comprises the steps of:
connecting said image erecting prism (106) to the telescope body (101) through an interface (200a; 200b) defining an attachment point (AP),
positioning said attachment point (AP) on the centre axis (A) of the front lens (102), and
mounting said reticle (107) to the image erecting prism (106).

12. A method according to claim 11, wherein said interface (200a; 200b) comprises a connection portion (201a; 201b) and a support portion (202a; 202b), wherein connecting said image erecting prism (106) to the telescope body (101) comprises connecting said connection portion (201a; 201b) to said telescope body (101) and connecting said support portion (202a; 202b) to said image erecting prism (106).

13. A method according to claim 12, wherein said connection portion (201a; 201b) comprises a projecting part (203a; 203b), wherein the method further comprises connecting said connection portion (201a; 201b) to said telescope body (101) such that a longitudinal axis of said projecting part (203a; 203b) coincides with said centre axis (A) of the front lens (102).

14. A method according to claim 12 or 13, wherein said support portion (202a; 202b) comprises a support prism, wherein said method further comprises cementing said support prism to said image erecting prism (106).

15. A method according to any one of claims, wherein said image erecting prism is one of a Porro prism, a Porro prism of the first type, a Porro prism of the second type, a Porro-Abbe prism, a Porro-Perger prism, an Abbe-König prism, an Uppendahl prism, a Shmidt prism, a Schmidt-Pechan prism, a Leeman prism, or an Amici Roof prism
